# EUROPEAN PATENT SPECIFICATION

(11) **EP 4 468 490 B1**
(45) Date of publication and mention of the grant of the patent: **15.04.2026**
(21) Application number: 23807814.1
(22) Date of filing: 02.05.2023
(51) Int. Cl.: H01M 50/367, H01M 50/24, H01M 50/249, H01M 50/289, B60L 50/64, H01M 50/211, H01M 50/383, H01M 50/317, H01M 50/30

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 16.05.2022 KR 20220059601
(43) Date of publication of application: 27.11.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR)
(74) Representative: Plasseraud IP
(86) International application number: PCT/KR2023/005989
(87) International publication number: WO 2023/224291

(56) References cited:
- CN-A- 111 584 778
- CN-A- 111 668 410
- JP-A- 2015 018 706
- JP-A- 2018 073 560
- KR-A- 20200 098 281
- KR-A- 20220 018 796
- US-A1- 2019 157 636
- US-A1- 2019 296 293
- US-A1- 2020 099 030
- US-A1- 2022 021 073

## Description

### TECHNICAL FIELD

The present disclosure relates to a battery pack and a vehicle including the same, and more particularly, to a battery pack configured to ensure structural stability in case of a thermal event and a vehicle including the same.

The present application claims priority to Korean Patent Application No. 10-2022-0059601 filed on May 16, 2022 in the Republic of Korea.

### BACKGROUND ART

Recently, there has been a rapid increase in the demand for portable electronic products such as laptop computers, video cameras and mobile phones, and with the development of electric vehicles, accumulators for energy storage, robots and satellites, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like. Among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. Additionally, lithium secondary batteries comprise an electrode assembly including a positive electrode plate and a negative electrode plate coated with the positive electrode active material and the negative electrode active material, respectively, with a separator interposed between the positive electrode plate and the negative electrode plate and an outer packaging or a battery case accommodating the electrode assembly together with an electrolyte solution.

Meanwhile, lithium secondary batteries may be classified into can-type secondary batteries in which the electrode case is included in a metal can and pouch-type secondary batteries in which the electrode assembly is included in a pouch of an aluminum laminate sheet according to the shape of the battery case. Additionally, the can-type secondary batteries may be sub-classified into cylindrical batteries and prismatic batteries according to the shape of the metal can.

Here, the pouch of the pouch-type secondary batteries may largely include a lower sheet and an upper sheet disposed on the lower sheet. **In** this instance, the electrode assembly including the positive electrode, the negative electrode and the separator stacked and wound is received in the pouch. Additionally, after the electrode assembly is received, the upper sheet and the lower sheet are sealed along the edges by heat welding. Additionally, an electrode tab extended from each electrode may be coupled to an electrode lead, and an insulating film may be attached to an area of contact between the electrode lead and the sealing portion.

The pouch-type secondary batteries may have flexibility to form various shapes. Additionally, the pouch-type secondary batteries may realize secondary batteries of the same capacity with smaller volume and mass.

To provide high voltage and high current, the secondary batteries are used to manufacture a battery module or a battery pack by stacking or piling up a plurality of battery cells with or without mounting in a cartridge to form a closely packed structure, and electrically connecting them. US 2019/157636 discloses a battery pack. JP 2015 018706, US 2022/021073, KR 2020 0098281 and US 2019/296293 disclose a battery module.

In the above-described battery pack configuration, one of the important issues is safety. In particular, in case where a thermal event occurs in the battery module, high temperature and high pressure venting gas may occur in the battery module, and when the venting gas meets oxygen, flame may occur inside or outside of the battery module.

Additionally, when a thermal event occurs in any of the battery modules included in the battery pack, it is necessary to suppress the propagation of the event to the other battery module. Unless thermal propagation between the battery modules is successfully suppressed, it may lead to a thermal event in the other battery module included in the battery pack, causing a more serious problem such as a fire or explosion in the battery pack. Further, the fire or explosion in the battery pack may cause loss of lives or economic damage. Accordingly, the battery pack requires configuration for properly controlling the thermal event.

### DISCLOSURE

### Technical Problem

The present disclosure is designed to solve the above-described problem, and therefore the present disclosure is directed to providing a battery pack configured to ensure structural stability in case of a thermal event and a vehicle including the same.

The technical problem to be solved by the present disclosure is not limited to the above-described problems, and these and other problems will be clearly understood by those skilled in the art from the following description.

### Technical Solution

To achieve the above-described objective, a battery pack according to an aspect of the present disclosure includes a battery module, and a pack housing accommodating the battery module in a module receiving portion, and including an opening/closing member configured to vent a venting gas or flame out of the module receiving portion in an event of thermal runaway in the battery module.

The pack housing includes a side frame which forms a side of the pack housing, and at least a portion of which is disposed facing the opening/closing member, a flow path disposed between the module receiving portion and the side frame, and formed in communication with the module receiving portion through a circulation hole formed by opening up of the opening/closing member in the event of thermal runaway in the battery module, and an exit port disposed in the side frame, communicating with the flow path and configured to vent the venting gas or flame out of the pack housing.

Preferably, the opening/closing member may be configured such that an end contacts the side frame in the event of thermal runaway in the battery module.

Preferably, the opening/closing member may be configured to be open at an acute angle with respect to the circulation hole in the event of thermal runaway in the battery module.

Preferably, the exit port may be formed at a location in the side frame after the venting gas or flame flowing in the flow path bends on or more times.

Preferably, a plurality of the battery modules may be provided, and a plurality of the module receiving portions may be provided, the battery module may be received in each of the plurality of module receiving portions, and each of the plurality of module receiving portions may be configured to be air-tightly closed by a partition.

Preferably, each opening/closing member corresponding to each module receiving portion may be disposed in the partition.

Preferably, each opening/closing member may be configured to be open at an acute angle with respect to the circulation hole in the event of thermal runaway in the plurality of battery modules, and at least some of the opening/closing members may be configured to reduce an opening angle toward the exit port.

Preferably, the opening/closing member located furthest away from the exit port may be configured such that an end contacts the side frame in the event of thermal runaway in the plurality of battery modules.

Preferably, at least some of the opening/closing members may be configured to reduce a length toward the exit port.

Preferably, an interrupt member configured to prevent the flame may be disposed on a surface of each opening/closing member facing outside of the module receiving portion.

Preferably, the battery pack may further include a guide member disposed in a portion of the flow path located at a corner of the side frame, and configured to guide the venting gas or flame towards the exit port.

Preferably, the battery pack may further include a mesh member disposed in the exit port, and configured to filter out the flame and allow the venting gas to pass through.

Additionally, a vehicle according to another aspect of the present disclosure includes at least one battery pack according to an aspect of the present disclosure as described above.

### Advantageous Effects

According to an embodiment of the present disclosure, it may be possible to achieve the rapid venting of venting gas and/or flame through the opening/closing member, thereby suppressing the cause of fire in the battery module and enhancing structural stability of the battery pack.

Additionally, it may be possible to prevent venting gas and/or flame from staying in the pack housing, and guide the venting of venting gas and/or flame out of the pack housing more effectively.

Additionally, when thermal runaway simultaneously occurs in the plurality of battery modules, it may be possible to prevent restriction of the flows of venting gas and/or flame vented to the flow path through the opening up of each opening/closing member towards the exit port, and effectively prevent backflow of venting gas and/or flame into the plurality of module receiving portions.

Many other additional effects may be achieved by many other embodiments of the present disclosure. These effects of the present disclosure will be described in detail in each embodiment, or description of effects that can be easily understood by those skilled in the art is omitted.

### DESCRIPTION OF DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing a battery pack according to an embodiment of the present disclosure.
FIG. 2 is a diagram illustrating the detailed structure of the battery pack of FIG. 1.
FIG. 3 is a diagram showing a battery module of the battery pack of FIG. 2.
FIG. 4 is an enlarged diagram of section A in FIG. 2.
FIG. 5 is a diagram showing an opening/closing member in open state in FIG. 4.
FIGS. 6 and 7 are diagrams showing an example of venting of venting gas or flame in the event of thermal runaway in a battery module.
FIGS. 8 and 9 are diagrams showing another example of venting of venting gas or flame in the event of thermal runaway in a battery module.
FIG. 10 is a diagram showing a battery pack according to another embodiment of the present disclosure.
FIG. 11 is a diagram showing a battery pack according to another embodiment of the present disclosure.
FIG. 12 is a diagram showing a battery pack according to another embodiment of the present disclosure.
FIG. 13 is a diagram showing a battery pack according to another embodiment of the present disclosure.
FIG. 14 is a diagram showing a battery pack according to another embodiment of the present disclosure.
FIG. 15 is a diagram showing a battery pack according to another embodiment of the present disclosure.
FIGS. 16 and 17 are diagrams showing a battery pack according to another embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are an exemplary embodiment of the present disclosure to describe the technical aspect of the present disclosure and are not intended to be limiting, and thus it should be understood that a variety of other equivalents and modifications could have been made thereto at the time that the application was filed.

Additionally, the present disclosure includes many different embodiments. In the description of substantially identical or similar components for each embodiment, redundant description is omitted and difference(s) is described.

The terms indicating directions such as upper, lower, left, right, front and rear are used for convenience of description, and it is obvious to those skilled in the art that the terms may change depending on the position of the stated element or an observer.

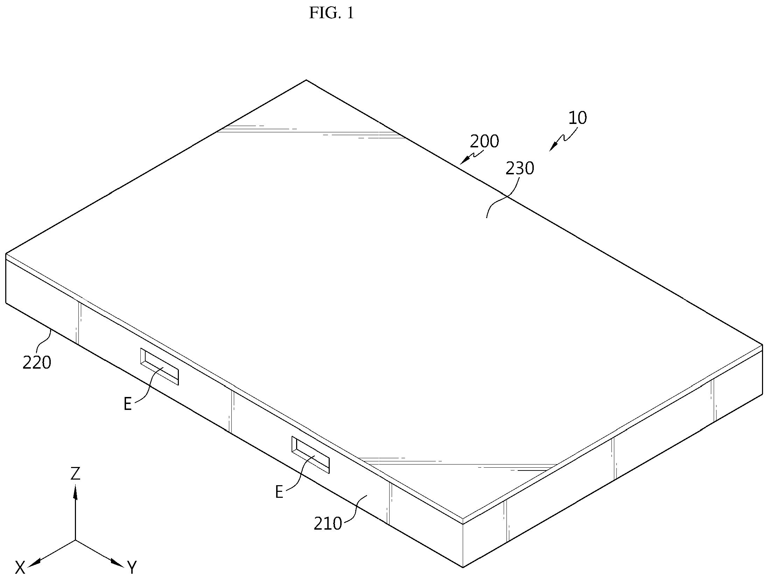

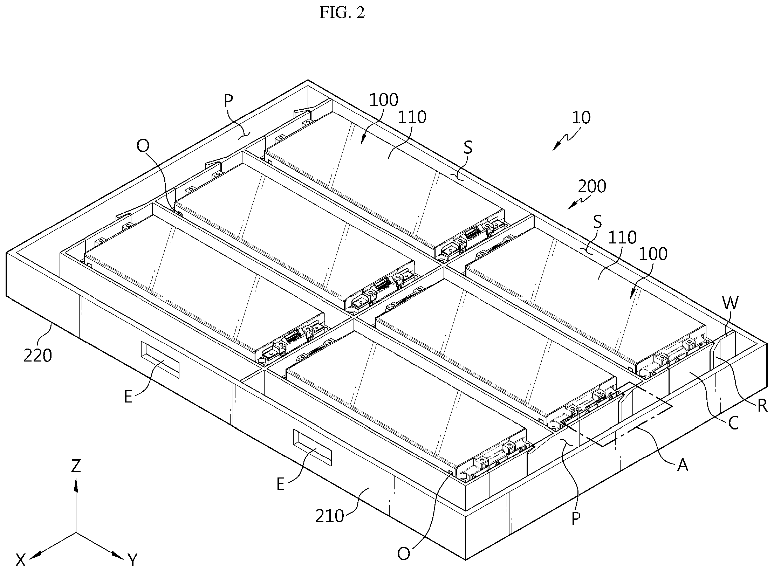

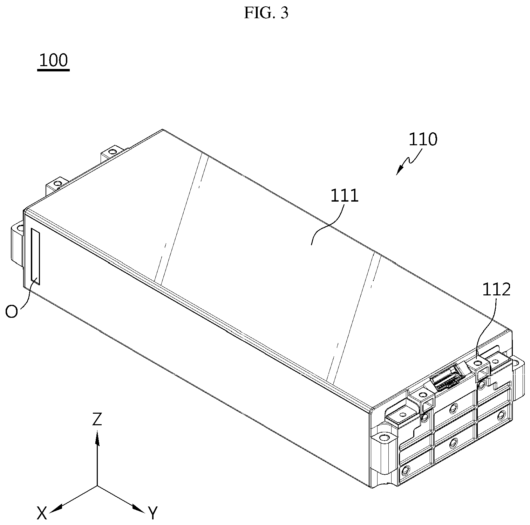

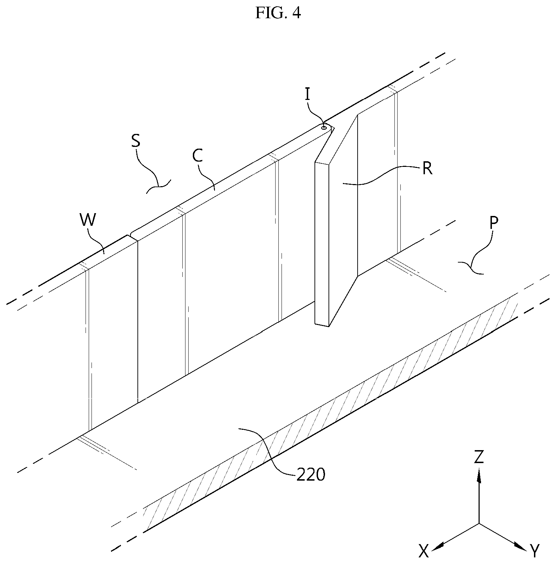

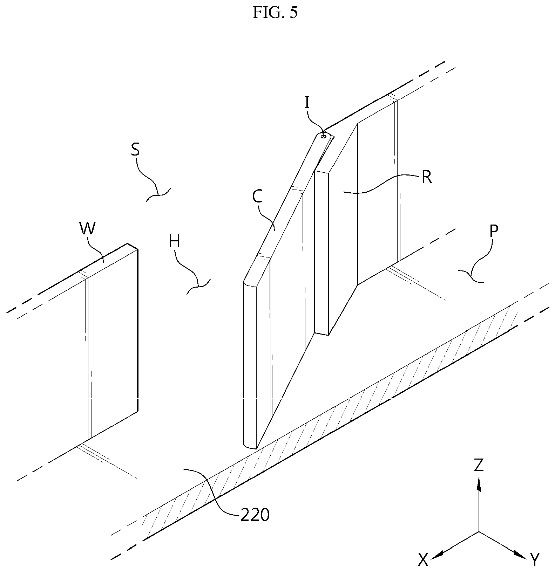

FIG. 1 is a diagram showing a battery pack 10 according to an embodiment of the present disclosure, FIG. 2 is a diagram illustrating the detailed structure of the battery pack 10 of FIG. 1, FIG. 3 is a diagram showing a battery module 100 of the battery pack 10 of FIG. 2, FIG. 4 is an enlarged diagram of section A in FIG. 2, and FIG. 5 is a diagram showing an opening/closing member C in open state in FIG. 4. In this instance, in FIG. 2, illustration of a top cover 230 as described below is omitted.

In an embodiment of the present disclosure, the X axis direction shown in the diagrams may refer to a front-rear direction, the Y axis direction may refer to a left-right direction perpendicular to the X axis direction on the horizontal plane (XY plane), and the Z axis direction may refer to an up-down direction perpendicular to the X axis direction and Y axis direction.

Referring to FIGS. 1 to 5, the battery pack 10 includes a battery module 100 and a pack housing 200.

The battery module 100 may include a cell assembly (not shown) and a module case 110.

The cell assembly may include at least one battery cell. Here, the battery cell may refer to a secondary battery. The battery cell may include a pouch type battery cell, a cylindrical battery cell or a prismatic battery cell. In an example, the battery cell may be a pouch type battery cell.

The module case 110 may accommodate the cell assembly. To this end, the module case 110 may have an internal receiving space for receiving the cell assembly inside.

Additionally, the module case 110 may include a case body 111 accommodating the cell assembly and having open ends at two sides and an end plate 112 coupled to the two sides of the case body 111. The case body 111 may be formed in the shape of a pipe having two open ends, and the end plates 112 may be coupled to the two open ends of the case body 111. Referring to FIG. 3, the end plates 112 may face each other along the Y axis. The end plates 112 may be coupled to the open ends of the case body 111 to prevent the exposure of electrode leads of the battery cells and a portion of connected part between the electrode leads and busbars.

The pack housing 200is configured to receive the battery module 100. To this end, the pack housing 200 has a module receiving portion S. The module receiving portion S may be an empty space shaped to receive the battery module 100 therein. Specifically, the module receiving portion S may be shaped to receive the battery module 100 therein through a partition W as described below. The pack housing 200 may comprise a material having heat resistance and high strength.

In the battery pack 10 of the present disclosure, an event such as thermal runaway may occur in the specific battery module 100. In this case, high temperature and high pressure venting gas may be produced in the specific battery module 100, and when the venting gas meets oxygen, flame may occur inside or outside of the battery module 100.

In this instance, the venting gas or flame may be highly likely to spread to the other battery module 100 adjacent to the specific battery module 100, and as a consequence, simultaneous thermal runaway or fires may occur in the plurality of battery modules 100. Meanwhile, the conventional battery pack includes the plurality of battery modules in the airtight pack housing and does not have a proper vent path that directs venting gas or flame out, and thus is vulnerable to multiple simultaneous fires.

To solve this problem, the pack housing 200 of the present disclosure includes the opening/closing member C. The opening/closing member C is configured to vent the venting gas and/or flame out of the module receiving portion S in the event of thermal runaway in the battery module 100.

Specifically, the opening/closing member C may be configured to open or close the inside of the module receiving portion S according to the pressure in the module receiving portion S caused by venting gas in the event of thermal runaway of the battery module 100.

In this instance, the opening/closing member C may be rotatably coupled to one side of the module receiving portion S. In an example, the opening/closing member C may be rotatably coupled to one side of the module receiving portion S through a coupling member I. The coupling member I may be a hinge, but is not limited thereto.

By the above-described exemplary configuration of the present disclosure, it may be possible to achieve the rapid venting of venting gas and/or flame through the opening/closing member C, thereby suppressing the cause of fire in the battery module 100 and enhancing structural stability of the battery pack 10.

Although not shown in detail, the coupling member I may include elastics and may be configured to control a rotational motion of the opening/closing member C. In an example, the elastics may be a hinge spring.

The opening/closing member C may be kept closed by the elastic force of the elastics of the coupling member I when thermal runaway does not occur in the battery module 100.

Meanwhile, when the pressure in the module receiving portion S rises above the reference pressure in the event of thermal runaway in the battery module 100, the opening/closing member C may be configured to deploy in the outward direction of the module receiving portion S to vent the venting gas and/or flame out of the module receiving portion S. The pressure in the module receiving portion S equal to or higher than the reference pressure may represent that the pressure in the module receiving portion S is higher than the external pressure of the module receiving portion S due to the produced venting gas. **In** this case, the compression force of air in the module receiving portion S applied to the opening/closing member C by the venting gas may be greater than the elastic force of the coupling member I that keeps the opening/closing member C closed. Accordingly, in the event of thermal runaway in the battery module 100, the opening/closing member C may easily deploy in the outward direction of the module receiving portion S by a pressure difference between the outside and inside of the module receiving portion S.

Accordingly, venting gas and/or flame may be rapidly vented through the open portion of the module receiving portion S. Additionally, when venting gas is vented, the internal pressure of the battery module 100 may drop fast.

Additionally, the opening/closing member C may be configured to close the module receiving portion S when the pressure in the module receiving portion S drops down to the reference pressure as venting gas is vented. The pressure in the module receiving portion S equal to or lower than the reference pressure may represent that the pressure in the module receiving portion S is lower than the external pressure of the module receiving portion S as venting gas is vented. In this case, not only the compression force of the outside air of the module receiving portion S applied to the opening/closing member C but also the elastic force of the coupling member I that keeps the opening/closing member C closed may be applied. Accordingly, when the pressure in the module receiving portion S decreases as venting gas is vented, the opening/closing member C may smoothly operate in the inward direction of the module receiving portion S by a pressure difference between the outside and inside of the module receiving portion S to close the module receiving portion S.

Accordingly, when venting gas emission reduces, it may be possible to effectively prevent backflow of venting gas and/or flame into the module receiving portion S by making it easy to close the module receiving portion S by the opening/closing member C. Additionally, it may be possible to suppress an additional fire in the module receiving portion S by preventing oxygen from entering the module receiving portion S.

The detailed structure of the pack housing 200 will be described in more detail below.

Referring back to FIGS. 1, 2, 4 and 5, the pack housing 200 includes a side frame 210, a flow path P and an exit port E.

The side frame 210 forms a side of the pack housing 200, and at least a portion is disposed facing the opening/closing member C. In this instance, the opening/closing member C may be disposed facing all the sides of the side frame 210, and may be disposed facing some of the sides of the side frame 210.

The flow path P is disposed between the module receiving portion S and the side frame 210, and configured to communicate with the module receiving portion S through a circulation hole H formed by the opening up of the opening/closing member C in the event of thermal runaway in the battery module 100. The flow path P may provide a space for movement to allow venting gas and/or flame vented through the circulation hole H to exit the pack housing 200.

Additionally, the opening/closing member C may be open towards the side frame 210 that it is facing, in the event of thermal runaway in the battery module 100. Additionally, the opening/closing member C may be configured to open or close the circulation hole H according to the pressure in the module receiving portion S in the event of thermal runaway in the battery module 100.

The exit port E is disposed in the side frame 210, in communication with the flow path P and configured to allow venting gas and/or flame to exit the pack housing 200. The exit port E may be formed in the shape of a hole having a predetermined area. **In** particular, the opening/closing member C may be open such that the end faces towards the exit port E in the event of thermal runaway in the battery module 100.

By the above-described configuration, venting gas and/or flame vented from the module receiving portion S may be guided in the space between the module receiving portion S and the side of the pack housing 200 and exit the pack housing 200. Accordingly, it may be possible to allow venting gas and/or flame to exit the pack housing 200 more stably.

Meanwhile, the pack housing 200 may further include a floor frame 220 and the top cover 230.

The floor frame 220 may form the bottom of the pack housing 200 and may be coupled to the side frame 210.

The top cover 230 may be coupled to the top of the side frame 210, and may air-tightly close the top of the battery module 100. In particular, the top cover 230 may air-tightly close the top of the module receiving portion S.

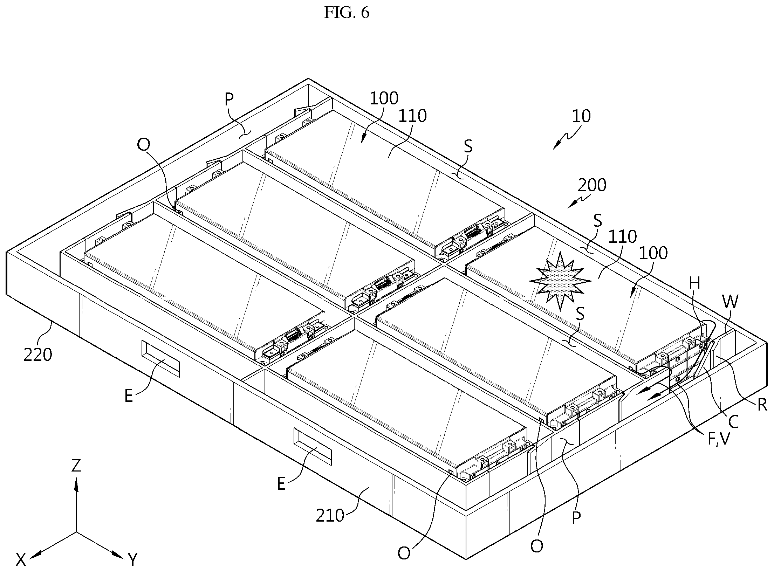

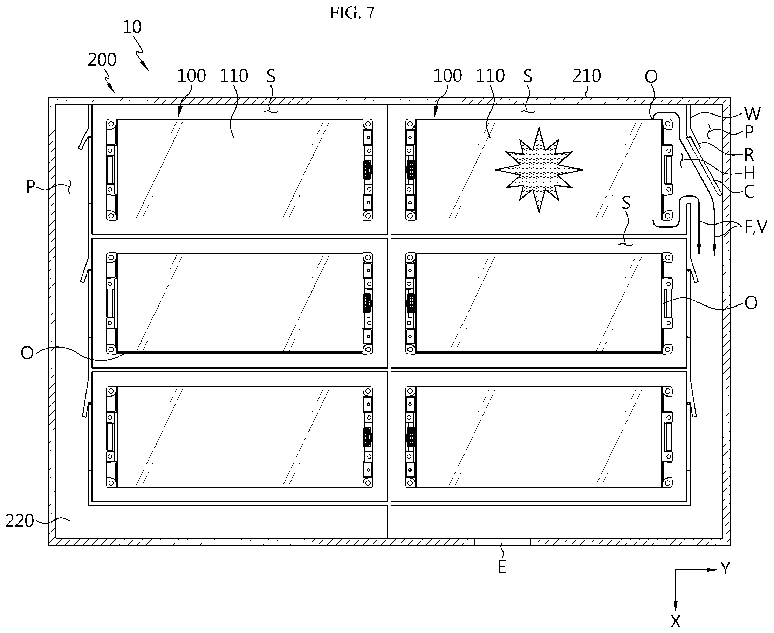

FIGS. 6 and 7 are diagrams showing an example of venting of venting gas or flame in the event of thermal runaway in the battery module 100. Specifically, FIGS. 6 and 7 show an example of thermal runaway in one battery module 100. In this instance, in FIGS. 6 and 7, venting gas and flame may be indicated by the symbols 'V' and 'F', respectively.

Referring to FIGS. 2 and 4 to 7, the opening/closing member C may be configured such that the end contacts the side frame 210 in the event of thermal runaway in the battery module 100. To this end, the length of the opening/closing member C (for example, the length extended from one side of the module receiving portion S) may be equal to or longer than the length (in Y axis direction) between the circulation hole H and the side frame 210.

Accordingly, when thermal runaway occurs in the battery module 100, the opening/closing member C may prevent venting gas and/or flame from entering the area opposite the exist port E on the basis of the location of contact between the end of the opening/closing member C and the side frame 210 in the flow path P. Accordingly, it may be possible to prevent venting gas and/or flame from staying in the pack housing 200, and guide the venting of venting gas and/or flame out of the pack housing 200 more effectively.

Additionally, the opening/closing member C may be configured to be open at an acute angle with respect to the circulation hole H in the event of thermal runaway in the battery module 100.

Specifically, referring back to FIGS. 2, 4 to 7, a restriction member R configured to restrict the opening angle of the opening/closing member C to less than a predetermined angle may be disposed on one side of the module receiving portion S. The restriction member R may have a plate shape. In particular, the restriction member R may be disposed at an acute angle with respect to the circulation hole H. The angle between the restriction member R and the circulation hole H may be set in an angle range between more than 0° and less than 90°.

Additionally, the restriction member R may be disposed on one side of the module receiving portion S such that it is further apart from the exit port E than the opening/closing member C. Meanwhile, the restriction member R may have a shorter length (for example, the length extended from one side of the module receiving portion S) than the opening/closing member C, but is not limited thereto. Meanwhile, the angle between the restriction member R and the circulation hole H may be set in a range in which the end of the opening/closing member C may contact the side frame 210 in the event of thermal runaway in the battery module 100.

Accordingly, when the opening/closing member C is open towards the side frame 210 in the event of thermal runaway in the battery module 100, the opening/closing member C may come into contact with the restriction member R, thereby restricting the opening angle to less than the predetermined angle with respect to the circulation hole H. Preferably, the opening/closing member C may be configured to be open at the acute angle with respect to the circulation hole H by the restriction member R.

Accordingly, venting gas and/or flame vented from the module receiving portion S by thermal runaway in the battery module 100 may be vented to the flow path P along the inner surface of the opening/closing member C inclined with respect to the circulation hole H. Accordingly, it may be possible to guide the flow of venting gas and/or flame towards the exit port E more effectively.

Referring back to FIGS. 2, 4 to 7, the exit port E may be formed at a location in the side frame 210 after venting gas and/or flame flowing in the flow path P bends one or more times.

That is, the exit port E may be formed at the location in the side frame 210 after the flow of venting gas and/or flame changes one or more times. In an example, the exit port E may be disposed at a location perpendicular to the location of the opening/closing member C in the flow path P on the basis of the corner of the side frame 210.

Accordingly, venting gas and/or flame may be vented out of the pack housing 200 at the location after the flow of venting gas and/or flame flowing in the flow path P changes one or more times, thereby effectively preventing backflow of venting gas and/or flame into the portion of the flow path P in which the opening/closing member C is located.

Referring to FIGS. 2, 4 and 5, a plurality of battery modules 100 may be provided, and a plurality of module receiving portions S corresponding to the plurality of battery modules 100 may be provided. In this instance, the plurality of module receiving portions S may be independent of each other.

In this instance, each of the plurality of battery modules 100 may be received in each of the plurality of module receiving portions S.

In particular, each of the plurality of module receiving portions S may be configured to be air-tightly closed by the partition W. In an example, the partition W may include a material having heat resistance and high strength.

The partition W may form a side of each module receiving portion S. Additionally, the partition W may be extended in the vertical direction corresponding to the height of the side frame 210. In this instance, the components of the partition W may be joined to each other by welding, and may be integrally formed by injection molding, but the manufacturing method is not limited thereto.

Additionally, at least a portion of the partition W may be spaced apart from the side frame 210. In an example, the flow path P may be formed at a gap between the partition W and the side frame 210.

Additionally, the floor frame 220 may be coupled to the bottom of the partition W, and the top cover 230 may be coupled to the top of the partition W. Meanwhile, in the battery pack 10 of the present disclosure, the top cover 230 may cover up the side frame 210 and the top of the partition W, and another cover (not shown) may be present on the top of the partition W.

By the above-described configuration, it may be possible to suppress multiple simultaneous fires between the adjacent battery modules 100 when thermal runaway occurs in the specific battery module 100.

In particular, the partition W may have each opening/closing member C corresponding to each module receiving portion S.

Specifically, the opening/closing member C may be rotatably coupled to one side of the partition W. In this instance, the opening/closing member C may be rotatably coupled to one side of the partition W through the coupling member I. Additionally, the restriction member R may be disposed on one side of the partition W and configured to restrict the opening angle of the opening/closing member C to less than the predetermined angle.

Each opening/closing member C disposed in the partition W, each corresponding to each module receiving portion S, may be configured to open or close the circulation hole H according to the pressure in each module receiving portion S in the event of thermal runaway in the battery module 100.

Meanwhile, as shown in FIGS. 2 and 3, the battery module 100 of the present disclosure may have a venting hole O in at least one surface of the module case 110 to vent the venting gas and/or flame. In an example, the venting hole O may be disposed in a top surface of the module case 110. However, as shown in FIGS. 2 and 3, the venting hole O may be disposed in two side surfaces of the module case 110. Here, the two surfaces may be opposite surfaces along the X axis, and the venting hole O may be extended along the Z axis. Additionally, the plurality of battery modules 100 may be received in each module receiving portion S such that the venting hole O is disposed close to the opening/closing member C.

When thermal runaway occurs in in the battery module 100, venting gas and/or flame generated in the battery module 100 may be directionally vented towards the two sides of the battery module 100 through the venting hole O. Additionally, venting gas and/or flame vented through the venting hole O may be rapidly vented to the flow path P through the circulation hole H via the space between the battery module 100 and the partition W in the module receiving portion S or the space between the battery module 100 and the side frame 210.

Accordingly, by the above-described exemplary configuration of the present disclosure, when simultaneously thermal runaway occurs in the plurality of battery modules 100, venting gas and/or flame vented through the venting hole O in the two side surfaces of the battery module 100 may be guided towards the flow path P and vented out of the pack housing 200 more rapidly.

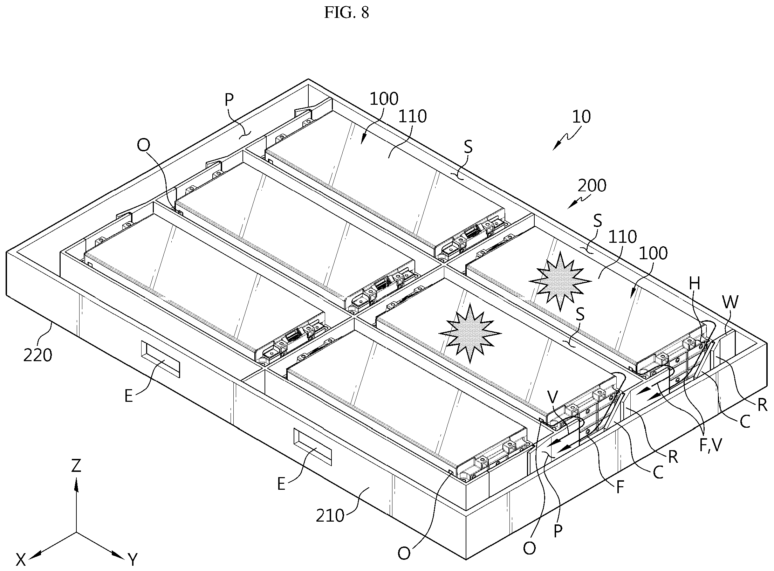

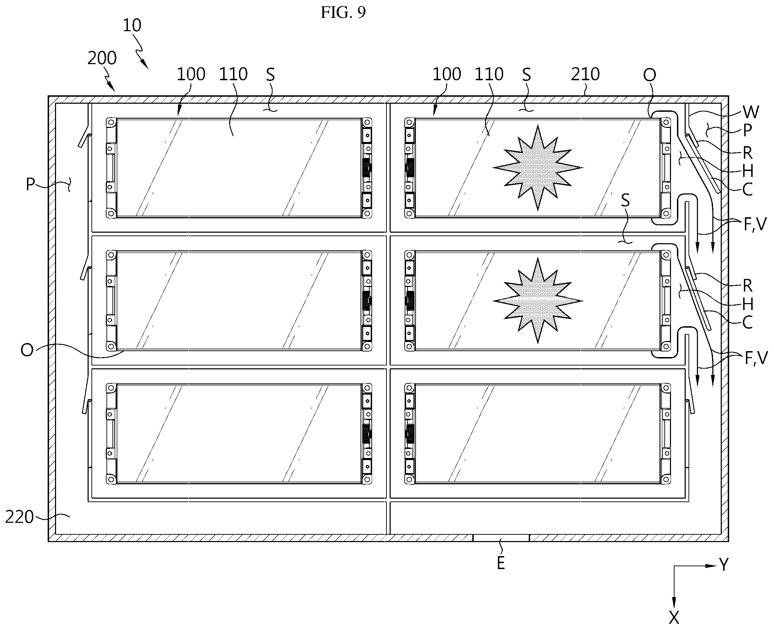

FIGS. 8 and 9 are diagrams showing another example of venting of venting gas or flame in the event of thermal runaway in the battery module 100. Specifically, FIGS. 8 and 9 show an example of thermal runaway in the plurality of battery modules 100. In this instance, in FIGS. 8 and 9, venting gas and flame may be indicated by the symbols 'V' and 'F', respectively.

Referring to FIGS. 2, 4, 8 and 9, at least some of the opening/closing members C may be configured to be open towards the side frame 210 to a lesser extent toward the exit port E in the event of thermal runaway in the plurality of battery modules 100.

As described above, each opening/closing member C may be configured to be open at an acute angle with respect to the circulation hole H in the event of thermal runaway in the plurality of battery modules 100.

Additionally, at least some of the opening/closing members C may be configured to reduce the opening angle toward the exit port E.

Specifically, the restriction member R configured to restrict the opening angle of the opening/closing member C to less than the predetermined angle may be disposed on one side of the module receiving portion S for each opening/closing member C. The restriction member R may be disposed at an acute angle with respect to the circulation hole H.

In particular, at least some of the restriction members R may be configured to reduce the angle with respect to the circulation hole H toward the exit port E. Accordingly, at least some of the opening/closing members C may be configured to reduce the opening angle toward the exit port E.

In an embodiment, each opening/closing member C may be configured to reduce the opening angle toward the exit port E. In this instance, the restriction member R disposed for each opening/closing member C may be configured to reduce the angle with respect to the circulation hole H toward the exit port E. In this case, venting gas and/or flame vented to the flow path P through the opening up of the specific opening/closing member C may be allowed to smoothly flow toward the exit port E without being restricted by the outer surface of the other opening/closing member C located closer to the exit port E than the specific opening/closing member C.

That is, as the opening/closing member C is located further away from the exit port E, venting gas and/or flame may be vented to the flow path P along the inner surface of the opening/closing member C so as to be guided in a direction close to the side frame 210. Accordingly, it may be possible to minimize the likelihood that venting gas and/or flame vented to the flow path P through the opening up of the specific opening/closing member C may hit the outer surface of the other opening/closing member C located closer to the exit port E than the specific opening/closing member C. Additionally, since the likelihood that venting gas and/or flame vented to the flow path P through the opening up of the specific opening/closing member C hits the outer surface of the other opening/closing member C is minimized, it may be possible to minimize the flow (backflow) of venting gas and/or flame vented to the flow path P back into the module receiving portion S.

By the above-described exemplary configuration of the present disclosure, when simultaneously thermal runaway occurs in the plurality of battery modules 100, venting gas and/or flame vented from the inside of each module receiving portion S may be vented to the flow path P along the inner surface of the opening/closing member C inclined with respect to the circulation hole H. Accordingly, the flows of venting gas and/or flame may be stably guided towards the exit port E.

Additionally, when simultaneously thermal runaway occurs in the plurality of battery modules 100, it may be possible to prevent restriction of the flows of venting gas and/or flame vented to the flow path P through the opening up of each opening/closing member C towards the exit port E, and effectively prevent backflow of venting gas and/or flame into the plurality of module receiving portions S.

Referring back to FIGS. 2, 4, 8 and 9, the opening/closing member C located furthest away from the exit port E may be configured such that the end contacts the side frame 210 in the event of thermal runaway in the plurality of battery modules 100. To this end, the length (for example, the length extended from one side of the module receiving portion S) of the opening/closing member C located furthest away from the exit port E may be equal to or longer than the length (in Y axis direction) between the circulation hole H and the side frame 210. Meanwhile, the angle between the circulation hole H and the restriction member R that restricts the opening angle of the opening/closing member C located furthest away from the exit port E may be set in the range in which the end of the opening/closing member C located furthest away from the exit port E may contact the side frame 210 in the event of thermal runaway in the battery module 100.

Accordingly, when thermal runaway simultaneously occurs in the plurality of battery modules 100, the opening/closing member C located furthest away from the exit port E may prevent venting gas and/or flame from entering the area opposite the exit port E on the basis of the location of contact between the end of the corresponding opening/closing member C and the side frame 210 in the flow path P. Accordingly, when thermal runaway occurs in the plurality of battery modules 100, it may be possible to prevent venting gas and/or flame from staying in the pack housing 200 and guide the venting of the venting gas and/or flame out of the pack housing 200 more effectively.

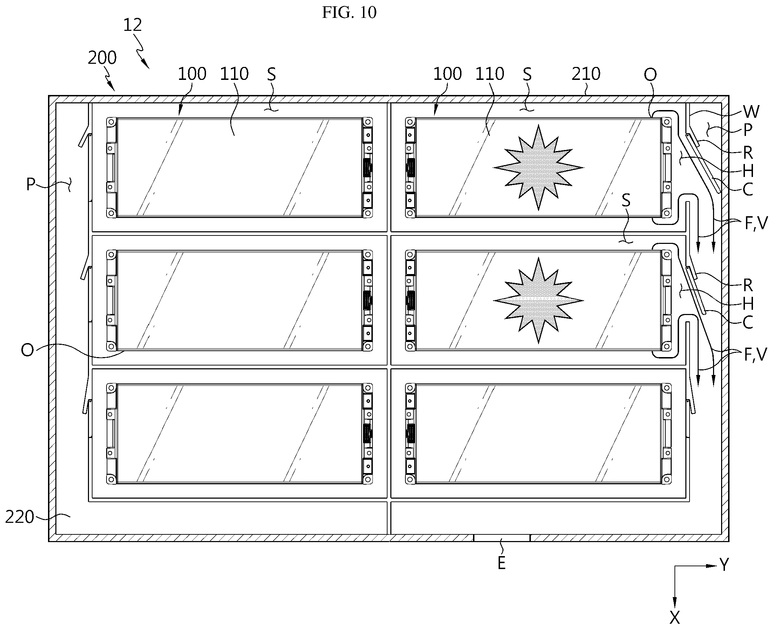

FIG. 10 is a diagram showing a battery pack 12 according to a second embodiment of the present disclosure.

The battery pack 12 according to this embodiment is similar to the battery pack 10 of the previous embodiment, and in the description of the components that are substantially identical or similar to those of the previous embodiment, redundant description is omitted, and different(s) between this embodiment and the previous embodiment will be described below. In this instance, in FIG. 10, venting gas and flame are indicated by the symbols 'V' and 'F', respectively.

As described above, each opening/closing member C may be configured to be open at an acute angle with respect to the circulation hole H in the event of thermal runaway in the plurality of battery modules 100. This may be accomplished by the restriction member R.

Referring to FIG. 10, in the battery pack 12 according to this embodiment, at least some of the opening/closing members C may be configured to reduce the length toward the exit port E in the event of thermal runaway in the plurality of battery modules 100. In this instance, each circulation hole H may be sized to conform to the size of each opening/closing member C.

In an embodiment, each opening/closing member C may be configured to reduce the length toward the exit port E. In this case, venting gas and/or flame vented to the flow path P through the opening up of the specific opening/closing member C may be allowed to smoothly flow towards the exit port E without being restricted by the outer surface of the other opening/closing member C located closer to the exit port E than the specific opening/closing member C.

That is, as the opening/closing member C is located further away from the exit port E, venting gas and/or flame may be vented to the flow path P along the inner surface of the opening/closing member C so as to be guided in a direction close to the side frame 210. Accordingly, it may be possible to minimize the likelihood that venting gas and/or flame vented to the flow path P through the opening up of the specific opening/closing member C hits the outer surface of the other opening/closing member C located closer to the exit port E than the specific opening/closing member C. Additionally, since the likelihood that venting gas and/or flame vented to the flow path P through the opening up of the specific opening/closing member C hits the outer surface of the other opening/closing member C is minimized, it may be possible to minimize the flow (backflow) of venting gas and/or flame vented to the flow path P back into the module receiving portion S.

By the battery pack 12 according to this embodiment, when simultaneously thermal runaway occurs in the plurality of battery modules 100, it may be possible to prevent restriction of the flows of venting gas and/or flame vented to the flow path P through the opening up of each opening/closing member C towards the exit port E, and effectively prevent backflow of venting gas and/or flame into the plurality of module receiving portions S.

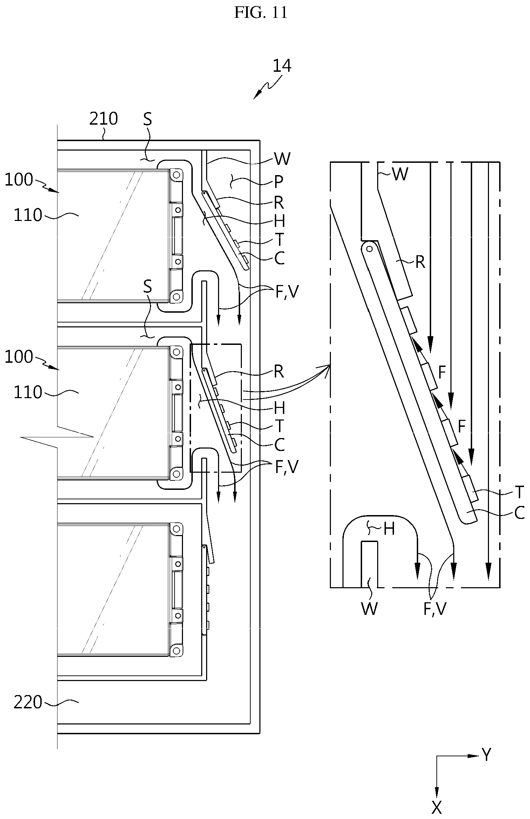

FIG. 11 is a diagram showing a battery pack 14 according to a third embodiment of the present disclosure.

The battery pack 14 according to this embodiment is similar to the battery pack 10 of the previous embodiment, and in the description of the components that are substantially identical or similar to those of the previous embodiment, redundant description is omitted, and different(s) between this embodiment and the previous embodiment will be described below. In this instance, in FIG. 11, venting gas and flame are indicated by the symbols 'V' and 'F', respectively.

Referring to FIG. 11, the battery pack 14 may further include an interrupt member T.

The interrupt member T may be disposed on a surface (an outer surface) of each opening/closing member C facing the outside of the module receiving portion S. The interrupt member T may interrupt flame (or sparks) occurring in the event of thermal runaway in the battery module 100. In an example, a plurality of interrupt members T may be formed in the shape of protrusion on the outer surface of the opening/closing member C.

When the plurality of interrupt members T is formed on the outer surface of the opening/closing member C, a portion of flame vented to the flow path P through the opening up of the specific opening/closing member C may hit the interrupt member T formed on the outer surface of the other opening/closing member C located closer to the exit port E than the specific opening/closing member C and stay on the outer surface of the opening/closing member C. Accordingly, it may be possible to minimize the exposure of flame through the pack housing 200.

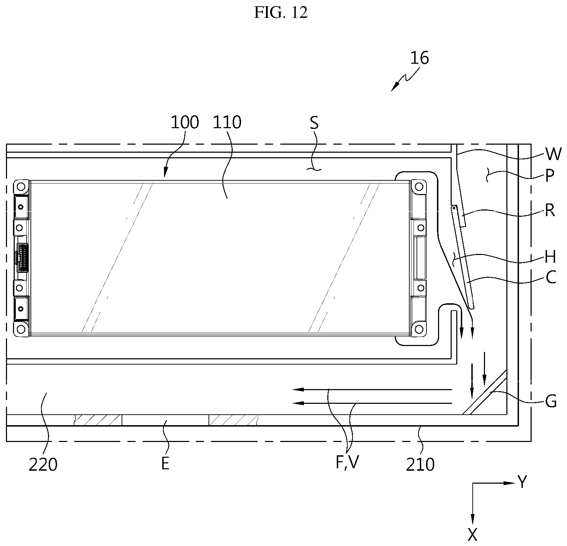

FIG. 12 is a diagram showing a battery pack 16 according to a fourth embodiment of the present disclosure.

The battery pack 16 according to this embodiment is similar to the battery pack 10 of the previous embodiment, and in the description of the components that are substantially identical or similar to those of the previous embodiment, redundant description is omitted, and different(s) between this embodiment and the previous embodiment will be described below.

Referring to FIG. 12, the battery pack 16 may further include a guide member G.

The guide member G maybe disposed at a portion of the flow path P located at the corner of the side frame 210, and may be configured to guide venting gas and/or flame towards the exit port E. In an example, the guide member G may include a material having heat resistance and high strength.

The guide member G may have one end coupled to the portion of the side frame 210 facing the opening/closing member C. Additionally, the guide member G may have the other end coupled to the portion of the side frame 210 in which the exit port E is located. Additionally, the guide member G may be inclined from the portion of the side frame 210 facing the opening/closing member C to the portion of the side frame 210 in which the exit port E is located.

By the above-described exemplary configuration, the flow of venting gas and/or flame flowing in the flow path P may be smoothly guided towards the exit port E. Additionally, since the flow of venting gas and/or flame changes through the guide member G inclined towards the exit port E, it may be possible to prevent backflow of venting gas and/or flame into the portion of the flow path P in which the opening/closing member C is located.

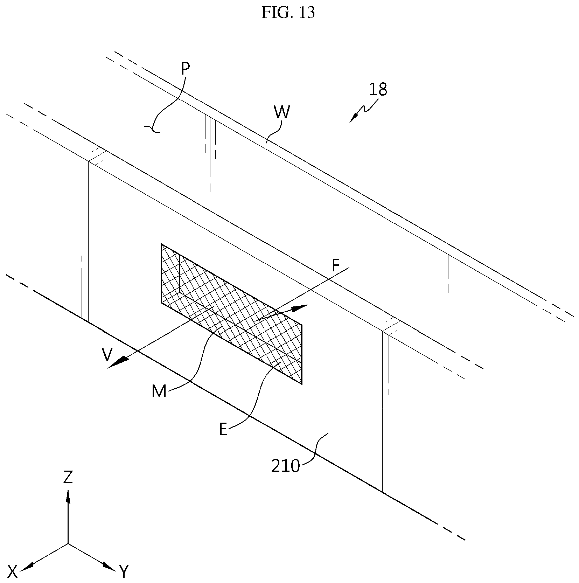

FIG. 13 is a diagram showing a battery pack 18 according to a fifth embodiment of the present disclosure.

The battery pack 18 according to this embodiment is similar to the battery pack 10 of the previous embodiment, and in the description of the components that are substantially identical or similar to those of the previous embodiment, redundant description is omitted, and different(s) between this embodiment and the previous embodiment will be described below.

Referring to FIG. 13, the battery pack 18 may further include a mesh member M.

The mesh member M may be disposed in the exit port E and configured to filter out flame and allow venting gas to pass through. The mesh member M may be in the shape of a plate member having pores, or a mesh formed by weaving a plurality of wires. In this instance, the pores may have a sufficient size to filter out flame vented out of the pack housing 200 from the flow path P. That is, the mesh member M may prevent flame from being vented out of the pack housing 200 and causing a fire.

By the battery pack 18 according to this embodiment, it may be possible to suppress the passage of flame and allow venting gas to pass through the mesh structure formed in the exit port E. Accordingly, it may be possible to minimize the exposure of flame through the pack housing 200 and achieve rapid venting of venting gas.

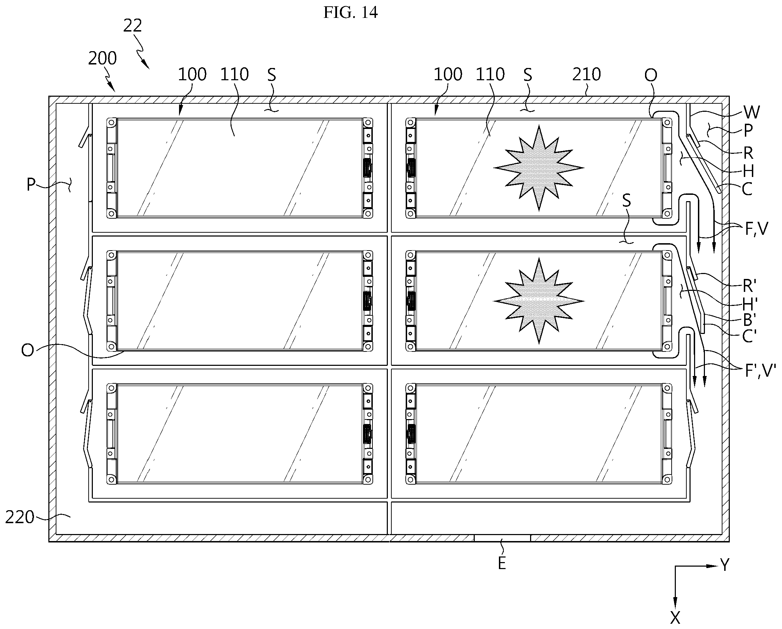

FIG. 14 is a diagram showing a battery pack 20 according to another embodiment of the present disclosure.

Referring to FIG. 14, in the battery pack 20 according to this embodiment, each opening/closing member C may further include a bending portion B formed by bending a portion of the opening/closing member C. The bending portion B may bend from the center of the opening/closing member C in the outward direction of the module receiving portion S. The bending portion B may be at an obtuse angle to prevent restriction of the movement of venting gas and/or flame vented through the circulation hole H. Additionally, unlike FIG. 14, the bending portion B may be curved.

In this instance, as shown in FIG. 14, as the opening/closing member C is located further away from the exit port E, the angle formed by the bending portion B may be greater. For example, the opening/closing member C located furthest away from the exit port E may be at 180° or an angle approximately close to 180° and may contact the side frame 210. In contrast, the opening/closing member C' located close to the exit port E may be bent at a smaller angle, for example, 120°.

Accordingly, the bending portion B' may minimize the likelihood that the flow of venting gas and/or flame F, V vented to the flow path P through the opening up of the opening/closing member C located further away from the exit port E than the specific opening/closing member C' towards the exit port E hits the outer surface of the specific opening/closing member C', thereby preventing obstruction of the other flow of gas or flame vented to the flow path P in the rear side. Additionally, it may be possible to minimize the flow (backflow) of venting gas and/or flame F, V vented to the flow path P through the opening up of the opening/closing member C located further away from the exit port E than the specific opening/closing member C' back into the module receiving portion S due to being blocked by the opening/closing member C' bent towards the open circulation hole H'.

Additionally, by the above-described exemplary configuration, when venting gas or flame F', V' is vented through the circulation hole H', venting gas or flame F', V' may be vented to the flow path P more smoothly through the bent shape of the opening/closing member C'. That is, by the above-described exemplary configuration, when the opening/closing member C' is open, the bent end may be approximately parallel to the flow direction of the flow path P. Accordingly, flame F', V' or the like vented to the corresponding opening/closing member C' may be smoothly vented and flow along the flow direction of the flow path P as indicated in FIG. 14.

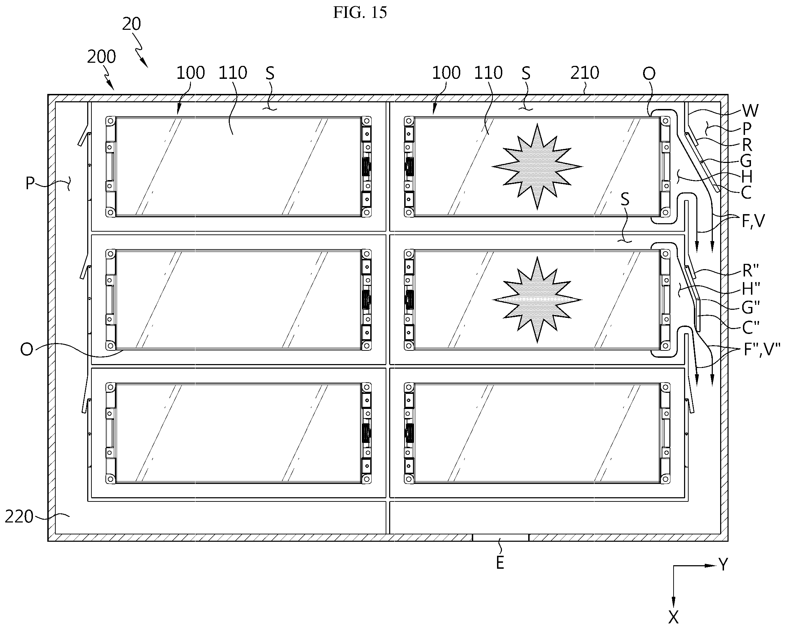

FIG. 15 is a diagram showing a battery pack 22 according to another embodiment of the present disclosure.

Referring to FIG. 15, in the battery pack 22 according to this embodiment, each opening/closing member C may further include a hinge portion G to rotate a portion of the opening/closing member C. The hinge portion G may be disposed in a predetermined portion of the opening/closing member C, especially, at the center. Additionally, the hinge portion G may be configured to form an obtuse angle between two sides to prevent restriction of the movement of venting gas and/or flame vented through the circulation hole H. Further, the opening/closing member C may be unfolded such that the angle between the two sides of the hinge portion G is up to 180°.

In particular, the hinge portion G may be configured such that the angle between two sides is 180° when there is no external pressure applied. That is, the opening/closing member C may be formed in a plate shape, in other words, such that the angle of the hinge portion G is 180° in a state that there is no external force applied or a predetermined level or less of force is applied. To this end, the hinge portion G may include elastics such as a spring. In the above-described exemplary configuration, when thermal runaway does not occur in the battery module 100, the opening/closing member C is not rotated by the hinge portion G and may be maintained at 180° and kept closed.

As shown in FIG. 15, when thermal runaway occurs in the plurality of battery modules 100, the specific opening/closing member C", for example, the opening/closing member located at the center in the front-rear direction (X axis direction) may open the module receiving portion S for which it takes responsibility when the internal pressure of the module receiving portion S rises. In this instance, the opening/closing member C" may be bent by gas and/or flame F, V vented from the other module receiving portion S. For example, in the embodiment of FIG. 15, the end of the opening/closing member C" may be rotated towards the circulation hole H" by the compression force of venting gas and/or flame F, V vented from the rear side (-X axis direction) to the flow path P.

By the above-described exemplary configuration, it may be possible to minimize the likelihood that venting gas and/or flame F, V vented to the flow path P through the opening up of the opening/closing member C located further away from the exit port E than the specific opening/closing member C" hits the outer surface of the other opening/closing member C", thereby achieving more smooth movement of gas and/or flame F, V in the flow path P. Additionally, in this case, it may be possible to minimize backflow of venting gas and/or flame F, V vented to the flow path P into the other module receiving portion S.

Meanwhile, in the same way as the specific opening/closing member C", the opening/closing member C located further away from the exit port E than the specific opening/closing member C" may be provided by the rotation of the hinge portion G towards the circulation hole H. In this instance, as the opening/closing member C is located closer to the exit port E, an angle at which the end portion rotates towards the circulation hole H may be higher. For example, since the opening/closing member C located furthest away from the exit port E does not have the compression force applied from the outer surface of the opening/closing member C, and only has the compression force applied from the inner surface due to venting gas and/or flame F, V vented to the circulation hole H, the hinge portion G is not rotated and may be kept at 180° and contact the side frame 210. In contrast, the opening/closing member C" located closer to the exit port E may be configured such that the end rotates better towards the circulation hole H" to provide a space for flow of gas (F, V) vented in the rear side. For example, when the hinge portion G includes elastics, the opening/closing member C" located close to the exit port E may include elastics having lower elastic modulus than the opening/closing member C located further away from the exit port E.

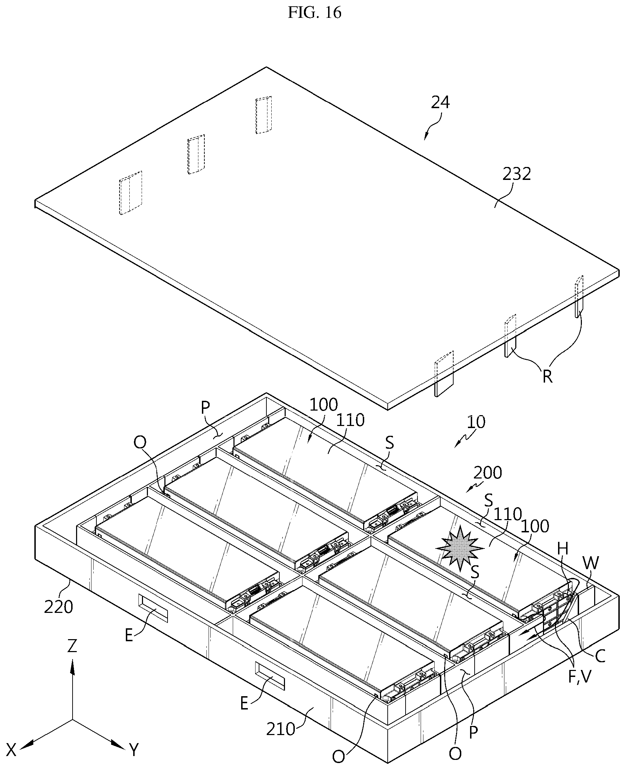

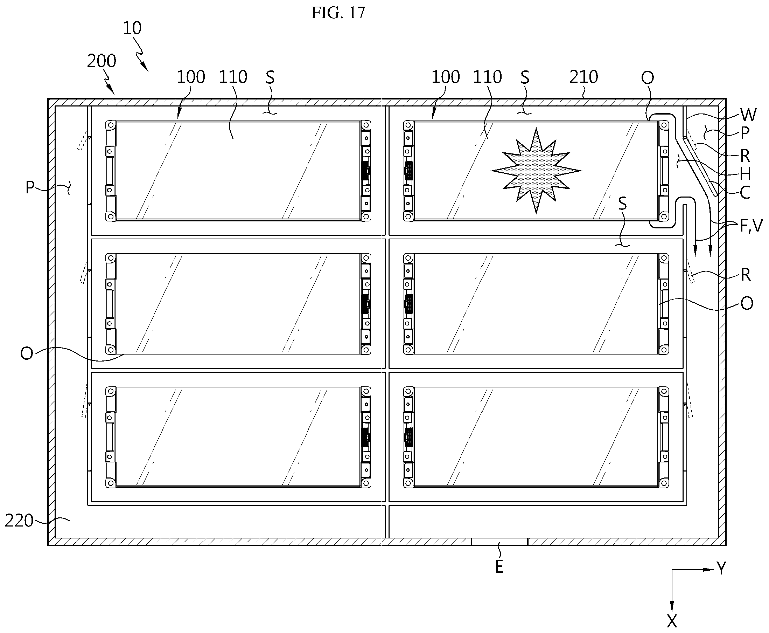

By the battery pack 22 according to this embodiment, when simultaneously thermal runaway occurs in the plurality of battery modules 100, it may be possible to prevent restriction of the flows of venting gas and/or flame vented to the flow path P toward the exit port E through the opening up of each opening/closing member C towards the exit port E, and effectively prevent backflow of venting gas and/or flame into the plurality of module receiving portions S. FIGS. 16 and 17 are diagrams showing a battery pack 24 according to another embodiment of the present disclosure. FIG. 16 is an exploded perspective view of the battery pack 24, and FIG. 17 is a diagram showing the battery pack 24 with a top cover 232 coupled thereto when viewed from the top.

Referring to FIGS. 16 and 17, unlike the above-described embodiments in which the restriction member R is coupled to one side of the partition W, the battery pack 24 may include the restriction member R incorporated into the top cover 230.

That is, the top cover 232 according to this embodiment may include the restriction member R that protrudes from at least one surface of the top cover 232 to restrict the opening angle of the opening/closing member C to less than the predetermined angle. The top cover 232 may be in the shape of a rectangular plate coupled to the top of the partition W and configured to simultaneously cover the side frame 210 and the partition W.

Accordingly, the partition W structure formed on top of the floor frame 220 is structurally simplified, which makes the fabrication process easy and reduces the cost. Additionally, when the top cover 232 is assembled with the floor frame 220, the restriction member R guides the assembly location, thereby enhancing the assembly efficiency, and one end of the restriction member R is supported on the partition W, so it may be possible to prevent the top cover 232 from moving in the horizontal direction (X axis or Y axis direction) and the vertical direction (Z axis direction), thereby enhancing the coupling strength between the top cover 232 and the floor frame 220.

Meanwhile, the height of the restriction member R of the top cover 232 may be equal to or smaller than the height of the partition W or the side frame 210. In an embodiment, when the height of the restriction member R is equal to the height of the partition W or the side frame 210, unlike the above-described embodiments in which the top cover 230 is coupled to the side frame 210 and the top end of the partition W, the top cover 230 may be directly coupled to not only the side frame 210 and the partition W but also the floor frame 220 by the restriction member R. That is, the restriction member R may be coupled to one side of the partition W to which the opening/closing member C is coupled and may be coupled with the lower end in contact with the floor frame 220. By the above-described configuration, when a vertical compression force is applied to the battery pack 24 or vertical bending impact is applied to the battery pack 24, it may be possible to ensure strength or stability without any pack reinforcement.

Accordingly, in the event of thermal runaway in the plurality of battery modules 100, the battery pack 20 according to this embodiment may prevent venting gas and/or flame from staying in the pack housing 200, and guide the venting of venting gas and/or flame out of the pack housing 200 more effectively, and ensure coupling stability of the battery pack 24 by the restriction member R of the top cover 232 coupled to the partition W and the floor frame 220.

As described above, according to an embodiment of the present disclosure, it may be possible to achieve the rapid venting of venting gas and/or flame through the opening/closing member C, thereby suppressing the causes of fires in the battery module 100 and enhancing structural stability of the battery pack 10, 12, 14, 16, 18, 20, 22, 24.

Additionally, it may be possible to prevent venting gas and/or flame from staying in the pack housing 200 and guide the venting of venting gas and/or flame out of the pack housing 200 more effectively.

Additionally, when simultaneously thermal runaway occurs in the plurality of battery modules 100, it may be possible to prevent restriction of the flows of venting gas and/or flame vented to the flow path P through opening up of each opening/closing member C towards the exit port E, and effectively prevent backflow of venting gas and/or flame into the plurality of module receiving portions S.

Meanwhile, in addition to the above-described configuration, the battery pack 10, 12, 14, 16, 18, 20, 22, 24 according to the present disclosure may further include devices for controlling the charge/discharge of the battery pack 10, 12, 14, 16, 18, 20, 22, 24, for example, a Battery Management System (BMS), a current sensor and a fuse.

Additionally, the battery pack 10, 12, 14, 16, 18, 20, 22, 24 according to the present disclosure may be applied to a vehicle such as an electric vehicle. That is, the vehicle according to the present disclosure may include at least one battery pack 10, 12, 14, 16, 18, 20, 22, 24 according to the present disclosure.

## Claims

1. A battery pack (10, 12, 14, 16, 18, 20, 22, 24), comprising:
a battery module (100); and
a pack housing (200) accommodating the battery module (100) in a module receiving portion (S), and including an opening/closing member (C) configured to vent a venting gas or flame out of the module receiving portion (S) in an event of thermal runaway in the battery module (100),
**characterized in that** the pack housing (200) includes:
a side frame (210) which forms a side of the pack housing (200), and at least a portion of which is disposed facing the opening/closing member (C);
a flow path (P) disposed between the module receiving portion (S) and the side frame (210), and formed in communication with the module receiving portion (S) through a circulation hole (H) formed by opening up of the opening/closing member (C) in the event of thermal runaway in the battery module (100); and
an exit port (E) disposed in the side frame (210), communicating with the flow path (P) and configured to vent the venting gas or flame out of the pack housing (200).

2. The battery pack (10, 12, 14, 16, 18, 20, 22, 24) according to claim 1, wherein the opening/closing member (C) is configured such that an end contacts the side frame (210) in the event of thermal runaway in the battery module (100).

3. The battery pack (10, 12, 14, 16, 18, 20, 22, 24) according to claim 1, wherein the opening/closing member (C) is configured to be open at an acute angle with respect to the circulation hole (H) in the event of thermal runaway in the battery module (100).

4. The battery pack (10, 12, 14, 16, 18, 20, 22, 24) according to claim 1, wherein the exit port (E) is formed at a location in the side frame (210) after the venting gas or flame flowing in the flow path (P) bends on or more times.

5. The battery pack (10, 12, 14, 16, 18, 20, 22, 24) according to claim 1, wherein a plurality of the battery modules (100) is provided, and a plurality of the module receiving portions (S) is provided,
wherein the battery module (100) is received in each of the plurality of module receiving portions (S), and
wherein each of the plurality of module receiving portions (S) is configured to be air-tightly closed by a partition (W).

6. The battery pack (10, 12, 14, 16, 18, 20, 22, 24) according to claim 5, wherein each opening/closing member (C) corresponding to each module receiving portion (S) is disposed in the partition (W).

7. The battery pack (10, 12, 14, 16, 18, 20, 22, 24) according to claim 6, wherein each opening/closing member (C) is configured to be open at an acute angle with respect to the circulation hole (H) in the event of thermal runaway in the plurality of battery modules (100), and
wherein at least some of the opening/closing members (C) are configured to reduce an opening angle toward the exit port.

8. The battery pack (10, 12, 14, 16, 18, 20, 22, 24) according to claim 6, wherein the opening/closing member (C) located furthest away from the exit port (E) is configured such that an end contacts the side frame (210) in the event of thermal runaway in the plurality of battery modules (100).

9. The battery pack (12) according to claim 6, wherein at least some of the opening/closing members (C) are configured to reduce a length toward the exit port (E).

10. The battery pack (14) according to claim 6, wherein an interrupt member (T) configured to prevent the flame is disposed on a surface of each opening/closing member (C) facing outside of the module receiving portion (S).

11. The battery pack (16) according to claim 1, further comprising:
a guide member (G) disposed in a portion of the flow path (P) located at a corner of the side frame (210), and configured to guide the venting gas or flame towards the exit port (E).

12. The battery pack (18) according to claim 1, further comprising:
a mesh member (M) disposed in the exit port (E), and configured to filter out the flame and allow the venting gas to pass through.

13. A vehicle comprising at least one battery pack (10, 12, 14, 16, 18, 20, 22, 24) according to any one of claims 1 to 12.

## Patentansprüche

1. Batteriepack (10, 12, 14, 16, 18, 20, 22, 24), umfassend:
ein Batteriemodul (100); und
ein Packgehäuse (200), welches das Batteriemodul (100) in einem Modul-Aufnahmeabschnitt (S) aufnimmt und ein Öffnungs-/Schließelement (C) umfasst, welches dazu eingerichtet ist, ein Abführgas oder eine Flamme aus dem Modul-Aufnahmeabschnitt (S) in einem Fall eines thermischen Durchgehens in dem Batteriemodul (100) abzuführen,
**dadurch gekennzeichnet, dass** das Packgehäuse (200) umfasst:
einen Seitenrahmen (210), welcher eine Seite des Packgehäuses (200) bildet und von welchem wenigstens ein Abschnitt zu dem Öffnungs-/Schließelement (C) weist;
einen Strömungspfad (P), welcher zwischen dem Modul-Aufnahmeabschnitt (S) und dem Seitenrahmen (210) angeordnet und in Kommunikation mit dem Modul-Aufnahmeabschnitt (S) durch ein Zirkulationsloch (H) gebildet ist, welches durch Öffnen des Öffnungs-/Schließelements (C) in dem Fall des thermischen Durchgehens in dem Batteriemodul (100) gebildet wird; und
einen Ausgangsanschluss (E), welcher in dem Seitenrahmen (210) angeordnet ist, mit dem Strömungspfad (P) kommuniziert und dazu eingerichtet ist, das Abführgas oder die Flamme aus dem Packgehäuse (200) abzuführen.

2. Batteriepack (10, 12, 14, 16, 18, 20, 22, 24) nach Anspruch 1, wobei das Öffnungs-/Schließelement (C) derart eingerichtet ist, dass ein Ende den Seitenrahmen (210) in dem Fall des thermischen Durchgehens in dem Batteriemodul (100) kontaktiert.

3. Batteriepack (10, 12, 14, 16, 18, 20, 22, 24) nach Anspruch 1, wobei das Öffnungs-/Schließelement (C) dazu eingerichtet ist, bei einem spitzen Winkel bezüglich des Zirkulationslochs (H) in dem Fall des thermischen Durchgehens in dem Batteriemodul (100) offen zu sein.

4. Batteriepack (10, 12, 14, 16, 18, 20, 22, 24) nach Anspruch 1, wobei der Ausgangsanschluss (E) an einer Stelle in dem Seitenrahmen (210) gebildet ist, nachdem das Abführgas oder die Flamme, welche in dem Strömungspfad (P) strömen, sich ein oder mehrere Male biegen.

5. Batteriepack (10, 12, 14, 16, 18, 20, 22, 24) nach Anspruch 1, wobei eine Mehrzahl von Batteriemodulen (100) bereitgestellt ist und eine Mehrzahl der Modul-Aufnahmeabschnitte (S) bereitgestellt ist,
wobei das Batteriemodul (100) in jedem aus der Mehrzahl von Modul-Aufnahmeabschnitten (S) aufgenommen ist, und
wobei jeder aus der Mehrzahl von Modul-Aufnahmeabschnitten (S) dazu eingerichtet ist, luftdicht von einer Unterteilung (W) verschlossen zu sein.

6. Batteriepack (10, 12, 14, 16, 18, 20, 22, 24) nach Anspruch 5, wobei jedes Öffnungs-/Schließelement (C) entsprechend jedem Modul-Aufnahmeabschnitt (S) in der Unterteilung (W) angeordnet ist.

7. Batteriepack (10, 12, 14, 16, 18, 20, 22, 24) nach Anspruch 6, wobei jedes Öffnungs-/Schließelement (C) dazu eingerichtet ist, bei einem spitzen Winkel bezüglich des Zirkulationslochs (H) in dem Fall des thermischen Durchgehens in der Mehrzahl von Batteriemodulen (100) offen zu sein, und wobei wenigstens einige der Öffnungs-/Schließelemente (C) dazu eingerichtet sind, einen Öffnungswinkel in Richtung des Ausgangsanschlusses zu reduzieren.

8. Batteriepack (10, 12, 14, 16, 18, 20, 22, 24) nach Anspruch 6, wobei das Öffnungs-/Schließelement (C), welches am weitesten weg von dem Ausgangsanschluss (E) angeordnet ist, derart eingerichtet ist, dass ein Ende den Seitenrahmen (210) in dem Fall des thermischen Durchgehens in der Mehrzahl von Batteriemodulen (100) kontaktiert.

9. Batteriepack (12) nach Anspruch 6, wobei wenigstens einige der Öffnungs-/Schließelemente (C) dazu eingerichtet sind, eine Länge in Richtung des Ausgangsanschlusses (E) zu reduzieren.

10. Batteriepack (14) nach Anspruch 6, wobei ein Unterbrechungselement (T), welches dazu eingerichtet ist, die Flamme zu verhindern, an einer Fläche von jedem Öffnungs-/Schließelement (C) nach außen von dem Modul-Aufnahmeabschnitt (S) weisend angeordnet ist.

11. Batteriepack (16) nach Anspruch 1, ferner umfassend:
ein Führungselement (G), welches in einem Abschnitt des Strömungspfads (P) angeordnet ist, welcher an einer Ecke des Seitenrahmens (210) angeordnet ist, und dazu eingerichtet ist, das Abführgas oder die Flamme in Richtung des Ausgangsanschlusses (E) zu führen.

12. Batteriepack (18) nach Anspruch 1, ferner umfassend:
ein Gewebeelement (M), welches in dem Auslassanschluss (E) angeordnet und dazu eingerichtet ist, die Flamme herauszufiltern und dem Abführgas zu erlauben, hindurchzutreten.

13. Fahrzeug, umfassend wenigstens einen Batteriepack (10, 12, 14, 16, 18, 20, 22, 24) nach einem der Ansprüche 1 bis 12.

## Revendications

1. Bloc-batterie (10, 12, 14, 16, 18, 20, 22, 24), comprenant :
un module de batterie (100) ; et
un boîtier de bloc (200) logeant le module de batterie (100) dans une partie de réception de module (S), et incluant un organe d'ouverture/fermeture (C) configuré pour évacuer un gaz de ventilation ou une flamme hors de la partie de réception de module (S) en cas d'emballement thermique dans le module de batterie (100),
**caractérisé en ce que** le boîtier de bloc (200) inclut :
un châssis latéral (210) qui forme un côté du boîtier de bloc (200), et dont au moins une partie est disposée en regard de l'organe d'ouverture/fermeture (C) ;
un trajet d'écoulement (P) disposé entre la partie de réception de module (S) et le châssis latéral (210), et formé en communication avec la partie de réception de module (S) à travers un trou de circulation (H) formé par ouverture de l'organe d'ouverture/fermeture (C) en cas d'emballement thermique dans le module de batterie (100) ; et
un orifice de sortie (E) disposé dans le châssis latéral (210), communiquant avec le trajet d'écoulement (P) et configuré pour évacuer le gaz de ventilation ou la flamme hors du boîtier de bloc (200).

2. Bloc-batterie (10, 12, 14, 16, 18, 20, 22, 24) selon la revendication 1, dans lequel l'organe d'ouverture/fermeture (C) est configuré de sorte qu'une extrémité est en contact avec le châssis latéral (210) en cas d'emballement thermique dans le module de batterie (100).

3. Bloc-batterie (10, 12, 14, 16, 18, 20, 22, 24) selon la revendication 1, dans lequel l'organe d'ouverture/fermeture (C) est configuré pour être ouvert à un angle aigu par rapport au trou de circulation (H) en cas d'emballement thermique dans le module de batterie (100).

4. Bloc-batterie (10, 12, 14, 16, 18, 20, 22, 24) selon la revendication 1, dans lequel l'orifice de sortie (E) est formé en un emplacement dans le châssis latéral (210) après que le gaz de ventilation ou la flamme passant dans le trajet d'écoulement (P) décrit une ou plusieurs courbes.

5. Bloc-batterie (10, 12, 14, 16, 18, 20, 22, 24) selon la revendication 1, dans lequel une pluralité des modules de batterie (100) sont fournis et une pluralité des parties de réception de module (S) sont fournies,
dans lequel le module de batterie (100) est reçu dans chacune de la pluralité de parties de réception de module (S), et
dans lequel chacune de la pluralité de parties de réception de module (S) est configurée pour être fermée hermétiquement à l'air par une cloison (W).

6. Bloc-batterie (10, 12, 14, 16, 18, 20, 22, 24) selon la revendication 5, dans lequel chaque organe d'ouverture/fermeture (C) correspondant à chaque partie de réception de module (S) est disposé dans la cloison (W).

7. Bloc-batterie (10, 12, 14, 16, 18, 20, 22, 24) selon la revendication 6, dans lequel chaque organe d'ouverture/fermeture (C) est configuré pour être ouvert à un angle aigu par rapport au trou de circulation (H) en cas d'emballement thermique dans la pluralité de modules de batterie (100), et
dans lequel au moins certains des organes d'ouverture/fermeture (C) sont configurés pour réduire un angle d'ouverture vers l'orifice de sortie.

8. Bloc-batterie (10, 12, 14, 16, 18, 20, 22, 24) selon la revendication 6, dans lequel l'organe d'ouverture/fermeture (C) le plus éloigné de l'orifice de sortie (E) est configuré de sorte qu'une extrémité est en contact avec le châssis latéral (210) en cas d'emballement thermique dans la pluralité de modules de batterie (100).

9. Bloc-batterie (12) selon la revendication 6, dans lequel au moins certains des organes d'ouverture/fermeture (C) sont configurés pour réduire une longueur vers l'orifice de sortie (E).

10. Bloc-batterie (14) selon la revendication 6, dans lequel un organe d'interruption (T) configuré pour empêcher la flamme est disposé sur une surface de chaque organe d'ouverture/fermeture (C) orientée vers l'extérieur de la partie de réception de module (S).

11. Bloc-batterie (16) selon la revendication 1, comprenant en outre :
un organe de guidage (G) disposé dans une partie du trajet d'écoulement (P) situé dans un coin du châssis latéral (210), et configuré pour guider le gaz de ventilation ou la flamme vers l'orifice de sortie (E).

12. Bloc-batterie (18) selon la revendication 1, comprenant en outre :
un organe maillé (M) disposé dans l'orifice de sortie (E), et configuré pour éliminer par filtration la flamme et permettre le passage du gaz de ventilation.

13. Véhicule comprenant au moins un bloc-batterie (10, 12, 14, 16, 18, 20, 22, 24) selon l'une quelconque des revendications 1 à 12.
